Europäisches Patentamt

European Patent Office

Office européen des brevets

(19)

(11) **EP 0 952 160 B1**

(12) **EUROPEAN PATENT SPECIFICATION**

(45) Date of publication and mention
of the grant of the patent:
**31.03.2004 Bulletin 2004/14**

(51) Int Cl.[7]: **C08B 3/06**, C08J 5/18
// C08L1:12

(21) Application number: **98107136.8**

(22) Date of filing: **20.04.1998**

(54) **Cellulose triacetate and method for its production**

Cellulosetriacetat und Verfahren zu deren Herstellung

Triacétate de cellulose et procédé de préparation

(84) Designated Contracting States:
**DE FR GB IT**

(43) Date of publication of application:
**27.10.1999 Bulletin 1999/43**

(73) Proprietor: **Daicel Chemical Industries, Ltd.**
**Osaka 590-8501 (JP)**

(72) Inventors:
• **Ozaki, Toru**
**Himeji-shi, Hyogo 671-1262 (JP)**
• **Nakano, Yukiko**
**Himeji-shi, Hyogo 671-1234 (JP)**
• **Habu, Naoto, c/o Utsunomiya University**
**Utsunomiya-shi, Tochigi 321-8505 (JP)**
• **Taniguchi, Hiroki**
**Himeji-shi, Hyogo 671-1224 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 590 401**          **US-A- 3 554 775**
**US-A- 3 870 703**

• **PATENT ABSTRACTS OF JAPAN vol. 97, no. 4, 30 April 1997 & JP 08 319301 A (DAICEL CHEM IND LTD), 3 December 1996 & DATABASE WPI Week 9707 Derwent Publications Ltd., London, GB; AN 73111**
• **PATENT ABSTRACTS OF JAPAN vol. 17, no. 73 (C-1026), 15 February 1993 & JP 04 277530 A (FUJI PHOTO FILM CO LTD), 2 October 1992 & DATABASE WPI Week 9246 Derwent Publications Ltd., London, GB; AN 377260**
• **PATENT ABSTRACTS OF JAPAN vol. 97, no. 7, 31 July 1997 & JP 09 077801 A (DAICEL CHEM IND LTD), 25 March 1997 & DATABASE WPI Week 9722 Derwent Publications Ltd., London, GB; AN 241759**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates to a cellulose triacetate useful for the production of protective films for polarizers, color filters, light-sensitive photographic films, etc. and a method for producing the cellulose triacetate.

BACKGROUND OF THE INVENTION

Cellulose triacetate film is tough and has good dimensional stability, heat resistance, and optical isotrophy. Therefore, it has been used in various applications such as a substrate for optical thin-film devices (e.g. a substrate for photosensitive materials), a polarizer protective film (e.g. liquid crystal protective film) for liquid crystal (LC) devices, and color filters. Therefore, cellulose triacetate film is required to have satisfactory optical characteristics, for example, low yellowness index, haze, and birefringence and high transparency.

To assure satisfactory optical characteristics, the cellulose triacetate film is generally produced by the technology which comprises acetylating a linter pulp or a high-purity hardwood pulp with an $\alpha$-cellulose content of about 97-98%, casting a solution (dope) containing the resulting cellulose triacetate and a solvent on a support, and releasing the resulting film from the support.

However, when a linter pulp is used, the cost of the cellulose triacetate is inevitably high. On the other hand, hardwood pulp generally is advantageous cost-wise but is not satisfactory in the releasability of the cast film from the support so that it is difficult to attain a satisfactory surface smoothness and sufficiently high productivity. Furthermore, when a pulp of comparatively low purity grade, i.e. with an $\alpha$-cellulose content of about 90-97%, is used, a cellulose triacetate with high optical characteristics can hardly be obtained, although an improvement in economics can be realized.

JP-A-4277530 relates to a process for making a film from a cellulose triacetate by using a dope comprising a cotton linter and wood pulp in a ratio of 50/50 to 80/20, respectively.

US Patent 3,554,775 discloses a solid cellulose organic ester composition containing a mannose/xylose ratio of 0.52 mole % (Example II).

It is, therefore, the object of the present invention to provide a cellulose triacetate which insures good releasability in a casting process and a method of producing the cellulose triacetate and a method by which a cellulose triacetate film with high releasability as well as satisfactory optical properties can be produced even from a pulp of low purity grade.

To accomplish the above objects, the inventors of the present invention did much research and found that the ratio of mannose and xylose occurring in the polysaccharide fraction (e.g. neutral polysaccharide fraction) of wood pulp or cellulose triacetate has a remarkable influence on releasability after casting and that even when a wood pulp with a comparatively low $\alpha$-cellulose content is used, a cellulose triacetate with excellent optical characteristics can be obtained if the proportions of mannose and xylose and the manufacturing conditions are controlled as herein defined.

The object of the invention is achieved by a cellulose triacetate containing, in terms of monosaccharides constituting a polysaccharide fraction:

- mannose and xylose in a mannose/xylose ratio of 0.35 to 2.0 (by mole), and
- a total content of mannose and xylose of 1.6 to 4 mole %.

Said object is also achieved by a method of producing a cellulose triacetate as defined above, which comprises acetylating a pulp containing, in terms of monosaccharides constituting a polysaccharide fraction:

- a mannose/xylose ratio of 0.35 to 2.0 (by mole), and
- a total content of mannose and xylose of 2 to 6 mole %.

It is preferred that the pulp has an $\alpha$-cellulose content of 92 to 96 % by weight and a total content of mannose and xylose of 2.5 to 5 mole % is used.

Said object is further achieved by the use of a cellulose triacetate as defined above and by a cellulose triacetate film obtainable by casting a solution of cellulose triacetate as defined above, and releasing the film from said support after partial drying.

Thus, the cellulose triacetate of the present invention contains mannose and xylose in a ratio of mannose/xylose = 0.35 to 3.0 (by mole) in a constituent sugar or saccharide of the polysaccharide fraction (e.g. neutral polysaccharide fraction). Of this cellulose triacetate, the total content (combined amount) of mannose and xylose in the constituent sugars (i.e. monosaccharides constituting polysaccharide fraction) accounts for about 1 to 5 mole %, and the average degree of acetylation of the cellulose triacetate is about 58 to 62.5%. The cellulose triacetate satisfying the above conditions exhibits excellent optical properties, for example an yellowness index of about 1 to 10, a haze value of about 1 to 8, and a transparency of about 60 to 100%. The cellulose triacetate having such characteristics is useful for the production of film.

In the production method of the present invention, a pulp with, in terms of a monosaccharide, a mannose/xylose ratio of 0.35 to 3.0 (by mole) of the constituent sugars is acetylated to a cellulose triacetate. In this method, a low-purity pulp such as, for example, a pulp with an $\alpha$-cellulose content of 90 to 97 weight % or a pulp with a total content of mannose and xylose in the constituent sugars of 2 to 6 mole % can be employed. For further improvements in optical characteristics, it is preferable that the amount of acetic acid be increased in the acetylation reaction stage and/or the product cellulose triacetate be treated with an oxidizing agent.

In this specification, the term "cellulose acetate" is sometimes used to mean "cellulose triacetate". Furthermore, unless otherwise specified, "mannose" and "xylose" as referred to herein are the corresponding components constituting the polysaccharide fraction (e.g. neutral polysaccharide fraction) as described in the following analysis. That is to say, "mannose" and "xylose" mean the mannose and xylose in the forms occurring in pulp or cellulose triacetate and their amounts indicated are the values in terms of mannose and xylose as monosaccharides, as determined by the following analysis.

DETAILED DESCRIPTION OF THE INVENTION

The present invention is characterized in that the cellulose triacetate contains, in terms of monosaccharides constituting a polysaccharide fraction, mannose and xylose in a specified ratio and is useful for the production of film. Thus, in the cellulose triacetate of the invention, the mannose/xylose ratio (by mole) is about 0.35/1 to 3.0/1, preferably about 0.35/1 to 2.5/1, and more preferably about 0.35/1 to 2/1. More specifically, the mannose/xylose (by mole) ratio is about 0.5/1 to 1.5/1 and particularly about 0.7/1 to 1.3/1. The mannose/xylose ratio of cellulose triacetate may substantially equal to the corresponding ratio of the starting material pulp. Generally, a cellulose triacetate with a mannose/xylose ratio of over 3/1 (by mole) can hardly be obtained. On the other hand, if the relative amount of mannose is too low, the releasability of the cast film from the support tends to be adversely affected.

In the cellulose triacetate, the total content (combined amount) of mannose and xylose in terms of the constituent saccharides or sugars may for example be about 1 to 5 mole %, preferably about 1.6 to 4 mole %, and more preferably about 2 to 3.5 mole % (e.g. 2.5 to 3.5 mole %).

Incidentally, "mannose" and "xylose" are principal constituent sugars of the hemicellulose (xylan, glucomannan, etc.) contained in a pulp.

The saccharide composition of the starting pulp and of the product cellulose triacetate can be analyzed by the following procedures.

Preparation of a sample (protocol)

Weigh exactly 200 mg of a sufficiently dried sample, add 3 ml of 72% sulfuric acid, and sonicate under ice-cooling for not less than 2 hours to dissolve the sample completely. Then, add 39 ml of distilled water to the above solution, shake well, reflux at 110°C in a nitrogen stream for 3 hours, and allow to cool over 30 minutes. Then, add 14 g of barium carbonate and neutralize with the aid of ultrasound under cooling with iced water. After 30 minutes, add a further 10 g of barium carbonate so as to neutralize to pH about 5.5 to 6.5, and filter. Dilute the filtrate 100-fold (by weight) with ultrapure water to provide a test sample.

Analysis

Analyze the test sample by ion chromatography under the following conditions.

High performance liquid chromatograph (HPLC, Dionex Co.,

DX-AQ)

| Detector | Pulsed amperometer (Au electrode) |
|---|---|
| Column | Dionex Co,. Carbo Pac PA-1 (250 x 4 mm) |
| Eluent | 2 mM NaOH |
| Flow rate | 1.0 ml/min. |

(continued)

| Post column | Dionex Co., AMMS-II |
|---|---|

The molar ratio of mannose, xylose, and glucose can be determined from the calibration curves constructed with authentic samples of mannose, xylose, and glucose beforehand. The respective constituent monosaccharide contents are expressed in mole %, with the total of the above 3 components being taken as 100%. It should be understood that in this specification the combined mole % of mannose and xylose is sometimes referred to as the hemicellulose content.

For improved dimensional stability, moisture resistance and heat resistance, the average degree of acetylation of the cellulose triacetate may for example be about 58 to 62.5%, preferably about 58.5 to 62%, and more preferably about 59 to 62% (e.g. 60 to 61%).

The degree of acetylation represents the amount of acetic acid bound and is the weight percentage of bound acetic acid per weight of cellulose unit. The degree of acetylation can be determined in accordance with the procedure for determination of the degree of acetylation as set forth in ASTM D-817-91 (test methods for cellulose acetate etc.). The test protocol is as follows. Weigh exactly 1.9 g of cellulose triacetate, previously dried, dissolve in 150 ml of a mixture of acetone-dimethyl sulfoxide (4:1, v/v), add 30 ml of an aqueous 1N-sodium hydroxide solution, and saponify at 25°C for 2 hours. Add phenolphthalein as an indicator and titrate the excess sodium hydroxide with 1N-sulfuric acid (concentration factor: F). Perform a blank test in the same manner and calculate the degree of acetylation by means of the following equation.

$$\text{Degree of acetylation (\%)} = [6.5 \times (B - A) \times F]/W$$

where A represents an amount of 1N-sulfuric acid (ml) added to the sample, B represents an amount of 1N-sulfuric acid (ml) added to blank, F shows a concentration factor of 1N-sulfuric acid, and W is a weight of the sample.

The degree of polymerization of cellulose acetate, in terms of viscosity average degree of polymerization, is about 200 to 400, preferably about 250 to 400, and more preferably about 270 to 400 (e.g. 290 to 400). Usually, the viscosity average degree of polymerization is about 270 to 350.

The average degree of polymerization can be determined by the intrinsic viscosity method of Uda et al. (Kazuo Uda & Hideo Saito: Journal of the Society of Fiber Science and Technology, Japan, Vol. 18, No. 1, 105-120, 1962). The test protocol is as follows.

Dissolve cellulose triacetate in a mixture of methylene chloride-methanol (9:1, by weight) at a predetermined concentration c (2.00 g/L). Then, inject the solution into an Ostward viscosimeter and measure the flow time (in seconds) t of the solution between the viscosimeter graduations at 25°C. On the other hand, measure the blank flow time (in seconds) t0 with the above solvent mixture and calculate the viscosity average degree of polymerization by means of the following formula.

$$\eta_{rel} = t/t0$$

$$[\eta] = (1n\ \eta_{rel})/c$$

$$DP = [\eta]/(6 \times 10^{-4})$$

where t shows a flow time (in seconds) of the solution, t0 shows a flow time (in seconds) of the solvent, c represents a cellulose triacetate concentration of the solution (g/L), $\eta_{rel}$ represents a relative viscosity, $[\eta]$ is an intrinsic viscosity, and DP is an average degree of polymerization.

When methylene chloride-methanol= 9/1 (by weight) is used as the solvent mixture, for instance, the viscosity of a 6 weight % solution of cellulose triacetate may for example be about 200 to 700 mPa·s, preferably about 250 to 600 mPa·s, and particularly about 250 to 500 mPa·s.

The yellowness index (YI), which is an indicator of yellowness of cellulose triacetate, may for example be about 1 to 10 (preferably 1 to 7, usually 2 to 8) and the haze value is about 1 to 8 (preferably 1 to 5, usually 2 to 7). The transparency of cellulose triacetate may for example be about 60 to 100% (preferably 70 to 100%, more preferably 75 to 100%), and usually about 70 to 85%.

The YI, haze, and transparency are determined as follows.

[Yellowness Index (YI)]

Weigh exactly 12.0 g of cellulose triacetate (CTA), previously dried, add 88.0 g of a mixture of methylene chloride-methanol (9:1, w/w), and effect thorough dissolution (a solution containing CTA in a concentration of 12% by weight). Using a color difference meter (Nippon Denshoku Kogyo Co., Ltd., Color Difference Meter Σ90) and a glass cell (45 mm wide, 45 mm high; light path length 10 mm), perform measurements and calculate YI by means of the following equation.

$$YI = YI_2 - YI_1$$

where $YI_1$ represents YI for the mixture of methylene chloride-methanol (9:1, w/w), and $YI_2$ shows YI for the CTA 12% (by weight) solution.

[Haze]

Weigh exactly 12.0 g of cellulose triacetate (CTA), previously dried, add 88.0 g of a mixture of methylene chloride-methanol (9:1, w/w), and effect thorough dissolution (CTA 12% (by weight) solution).
Using a turbidimeter (Nippon Denshoku Kogyo Co., Ltd.) and a glass cell (45 mm wide, 45 mm high, light path length 10 mm), perform measurements as follows.
Put the mixture of methylene chloride-methanol (9:1, w/w) in the glass cell, set the cell in the turbidimeter, and perform zeroing and calibration. Then, put the CTA 12% (by weight) solution in the glass cell, set the cell in the turbidimeter, and record the reading.

[Transparency]

Weigh exactly 8.0 g of cellulose triacetate (CTA), previously dried, add 125.3 g of a mixture of methylene chloride-methanol (9:1, w/w), and effect thorough dissolution (CTA 6% (by weight) solution).
Using an AKA photoelectric colorimeter equipped with a cesium photoelectric tube and a filter No. 12, put the mixture of methylene chloride-methanol (9:1, w/w) in the glass cell with a light path length of 100 mm and measure the blank transmittance. Then, put the CTA 6% (by weight) solution in the glass cell with a light path length of 100 mm and measure its transmittance. With the blank transmittance value being taken as 100%, the percentage of the transmittance value of the sample solution is recorded as the transparency of the sample.
The cellulose triacetate of the present invention may contain one or more plasticizers including, for example, phosphoric acid esters such as triphenyl phosphate (TPP), tricresyl phosphate (TCP), etc.; phthalic acid esters such as dimethyl phthalate (DMP), diethyl phthalate (DEP), dibutyl phthalate (DBP), dioctyl phthalate (DOP), di-2-ethylhexyl phthalate (DEHP), etc.; fatty acid esters such as butyl oleate, methyl acetyl ricinolate, dibutyl sebacate, etc.; citric acid esters such as acetyl triethyl citrate (OACTE), acetyl tributyl citrate (OACTB), etc.; trimellitic acid esters, and so forth.
The cellulose triacetate may contain aging inhibitors such as an antioxidant, a ultraviolet absorber, a peroxide decomposer, a radical scavenger, a metal deactivator or sequesterant, an acid acceptor, and other additives. Where necessary, the cellulose triacetate may contain such other additives as a nucleating agent, an inorganic powder (e.g. diatomaceous earth, calcium carbonate, titanium dioxide, etc.), a thermal stabilizer, a flame retardant, and a coloring agent.
In the method of the invention, a specific pulp is acetylated to produce a cellulose triacetate. Thus, the starting pulp should have, in terms of monosaccharides, a mannose/xylose ratio (by mole) of about 0.35/1 to 3.0/1 [preferably 0.5/1 to 3/1 and more preferably 0.7/1 to 2/1] just as mentioned for cellulose triacetate. Such pulp includes pulps composed at least predominantly of a softwood (coniferous) pulp, and the softwood pulp may be used with a cotton linter pulp and/or a hardwood pulp. The proportion of the linter pulp and/or the hardwood pulp relative to 100 parts by weight of the softwood pulp can be selected within the range of 0 to 300 parts by weight (e.g. 0 to 200 parts by weight), preferably about 0 to 100 parts by weight.
Compared with the linter pulp and hardwood pulp, the softwood pulp is lean in α-cellulose which is an indicator of purity and, therefore, is of relatively low purity. For this reason, the use of the softwood pulp is generally disadvantageous from the standpoint of optical characteristics of cellulose triacetate. However, in accordance with the technology of the present invention, the optical characteristics of cellulose triacetate can be improved while the good releasability of the cast film from the support is maintained even when a low-purity pulp with an α-cellulose content of about 90 to 97 weight %, preferably about 92 to 96% weight %, more preferably about 93 to 95 weight %, particularly about 90 to 95 weight %, is employed.
Regarding the total content (combined amount) of mannose and xylose (hemicellulose content) in the pulp, it is, for example, about 2 to 6 mole %, particularly 2.5 to 5 mole % (e.g. 3 to 5 mole %). Starting with such a pulp, a cellulose triacetate with very satisfactory optical characteristics can be obtained in accordance with the method of the invention.

The cellulose triacetate can be produced by the conventional production technology, for example, the process using sulfuric acid as a catalyst, the acetic acid process, and the methylene chloride process. The cellulose triacetate is usually produced by treating a starting pulp (cellulose) with acetic acid or the like (activation step), acetylating the same with acetic anhydride in the presence of the sulfuric acid catalyst to give a cellulose triacetate (acetylation step), and hydrolyzing the triacetate to adjust its degree of acetylation (saponification step).

In this process, the activation step can be carried out by spraying a mist of acetic acid or aqueous acetic acid on the pulp (cellulose) or by dipping the pulp in an acetic acid or aqueous acetic acid bath. The amount of acetic acid relative to 100 parts by weight of the pulp (cellulose) is about 10 to 100 parts by weight, preferably about 20 to 80 parts by weight, and more preferably about 30 to 60 parts by weight.

The amount of acetic anhydride to be used in the acetylation step can be selected from a range conducive to the above-mentioned degree of acetylation. Thus, based on 100 parts by weight of the pulp (cellulose), the amount of acetic anhydride may for example be about 230 to 300 parts by weight, preferably about 240 to 290 parts by weight, and more preferably about 250 to 280 parts by weight.

In the acetylation step, acetic acid is generally used as the solvent. The amount of acetic acid to be used for this purpose may for example be about 200 to 700 parts by weight, preferably about 300 to 600 parts by weight, and more preferably about 350 to 500 parts by weight per 100 parts by weight of the pulp (cellulose).

When a pulp containing mannose and xylose in the above-mentioned ratio and thus having a relatively high hemicellulose content (particularly the pulp predominantly composed of softwood pulp) is employed, the optical characteristics of cellulose triacetate are generally adversely affected. In order to use such a pulp and yet reduce the yellowness index and improve the transparency of the cellulose triacetate, it is recommendable to increase the amount of acetic acid in the acetylation step to not less than about 400 parts by weight (e.g. 400 to 500 parts by weight), preferably not less than 450 parts by weight (e.g. 450 to 500 parts by weight), relative to 100 parts by weight of the pulp.

The amount of sulfuric acid per 100 parts by weight of cellulose is generally about 1 to 15 parts by weight, preferably about 5 to 15 parts by weight, and more preferably about 5 to 10 parts by weight.

The saponification step can be carried out at a temperature of, for example, about 50 to 70°C.

In order to further improve the optical characteristics of cellulose triacetate, it is recommendable to treat the cellulose triacetate with an oxidizing agent in a suitable stage of production, for example after the acetylation reaction or after the saponification (hydrolysis) reaction. This treatment with an oxidizing agent is effective regardless of the amount of acetic acid used in the acetylation step but when a cellulose triacetate prepared by using an increased amount of acetic acid for acetylation is thus oxidized, the optical characteristics of cellulose triacetate are further improved.

The oxidizing agent that can be used includes but is not limited to hydrogen peroxide; peracids such as performic acid, peracetic acid, perbenzoic acid, lauroyl peroxide, benzoyl peroxide, etc.; and organic peroxides such as diacetyl peroxide and so forth. These oxidizing agents can be used each alone or in combination. The preferred oxidizing agent is one which can be easily removed from the cellulose triacetate without leaving any appreciable residues, thus including hydrogen peroxide, performic acid and peracetic acid. Particularly preferred are hydrogen peroxide and peracetic acid.

The amount of the oxidizing agent can be selected according to the required optical parameter levels and, based on 100 parts by weight of cellulose triacetate, may for example be about 0.01 to 5 parts by weight, preferably about 0.1 to 2.5 parts by weight, and particularly about 0.1 to 1 parts by weight.

The treatment with the oxidizing agent can be carried out at a temperature suited to the oxidizing agent, for example about 20 to 100°C, preferably about 30 to 70°C.

For enhanced stability of cellulose triacetate, a heat stabilizer, for example, an alkali metal salt (e.g. salts of potassium, sodium, etc.) or an alkaline earth metal salt (salts of calcium, magnesium, strontium, barium, etc.), can be added to the product cellulose triacetate.

The cellulose triacetate thus obtained is generally prepared into a dope using an organic solvent and cast on a suitable support, and after partial drying (in semi-dry state), the film is released from the support. The released film is then dried to form a film.

The organic solvent mentioned above includes, for example, halogenated hydrocarbons (e.g. methylene chloride, ethylene chloride, etc.), ketones (e.g. acetone, methyl ethyl ketone, methyl isobutyl ketone, cyclohexanone, etc.), esters (e.g. formic acid esters such as ethyl formate etc., acetic acid esters such as methyl acetate, ethyl acetate, etc., ethyl lactate, etc.), ethers (e.g. dioxane, dimethoxyethane, etc.), cellosolves (e.g. methylcellosolve, ethylcellosolve, etc.), cellosolve acetates (e.g. methylcellosolve acetate, ethylcellosolve acetate, etc.), and mixtures of such solvents. The solvent may contain nitro compounds (e.g. nitromethane, nitroethane, nitropropane, etc.) and/or lower alcohols (e.g. methanol, ethanol, diacetone alcohol, etc.).

The amount of the solvent can be selected from the range not adversely affecting castability and handleability. Thus, based on 100 parts by weight of cellulose triacetate, the solvent can be used in a proportion of, for example, about 150 to 1000 parts by weight (cellulose triacetate concentration of about 10 to 40% by weight), preferably about 200 to 900 parts by weight (cellulose triacetate concentration of about 10 to 30% by weight). The concentration of the cellulose triacetate in the dope is usually about 10 to 25 weight % (for example, 10 to 20 weight %).

The support may be any of the conventional supports, for example a mirror-finished or specular metal support (e.g. a stainless steel support).

Since the cellulose triacetate of the present invention has excellent releasability, the film in semi-dry state can be smoothly released from the support, with the result that a cellulose acetate film with a high degree of surface smoothness can be provided. Moreover, the cellulose acetate film of the present invention is outstanding in optical characteristics (yellowness, haze, and transparency).

The thickness of the cellulose triacetate film can be selected according to the intended application, for example from the range of about 5 to 500 μm, preferably about 10 to 200 μm, and more preferably about 20 to 150 μm (50 to 150 μm in particular).

The cellulose triacetate of the present invention is not only useful for the production of photographic film, polarizer protective film or color filter film by the casting technique but can be used, by taking advantage of its good releasability, as a material for the production of a thin-film optical film or device by, for example, the spin coating technology.

Since the cellulose triacetate of the present invention contains mannose and xylose in the specified ratio, it is easily releasable from the support in a casting process to provide a film with a high degree of surface smoothness. Moreover, even starting with a pulp of low purity, a cellulose triacetate with excellent optical characteristics can be produced.

EXAMPLES

The following examples are intended to illustrate the present invention in further detail and should by no means be construed as defining the scope of the invention.

Example 1

One-hundred (100) parts by weight of a softwood sulfite pulp (α-cellulose content 94.5%, mannose content about 2.0 mole %, xylose content about 1.8 mole %) was sprayed with 50 parts by weight of glacial acetic acid for activation. Then, to the activated mixture, a mixture of 470 parts by weight of glacial acetic acid, 265 parts by weight of acetic anhydride, and 8.3 parts by weight of sulfuric acid was added and the esterification reaction was carried out in the conventional manner. Thereafter, the hydrolysis reaction was carried out to provide a cellulose triacetate with a degree of acetylation of 61.3% and a viscosity average degree of polymerization of 301 (CTA, mannose content 1.42 mole %, xylose content 1.51 mole %). This CTA had a YI of 6.6, a haze value of 5.2, and a transparency of 82.2%.

One-hundred (100) parts by weight of the above CTA was mixed with 320 parts by weight of methylene chloride, 40 parts by weight of methanol, 25 parts by weight of butanol, and 15 parts by weight of triphenyl phosphate (TPP) to prepare a dope. This dope was cast on a smooth stainless steel plate (support) in a thickness of about 1 mm at room temperature and allowed to stand at room temperature for 3 to 4 minutes. Then, the releasability of the film from the support was evaluated in according to the following criteria. The releasability rating of the film was "O".

O:    Smoothly released with a minimum of peel drag and the film surface is smooth.

X:    Not smoothly released but a considerable peel drag is felt, film peelings remain on the stainless steel plate.

Example 2

One-hundred (100) parts by weight of a softwood sulfite pulp (α-cellulose content 94.5%, mannose content about 2.0 mole %, xylose content about 1.8 mole %) was sprayed with 50 parts by weight of glacial acetic acid for activation. Then, a mixture of 445 parts by weight of glacial acetic acid, 265 parts by weight of acetic anhydride, and 8.3 parts by weight of sulfuric acid was added to the activated mixture, and the esterification reaction was carried out in the conventional manner. Thereafter, the hydrolysis reaction was carried out, and based on 100 parts by weight of CTA, 0.2 part by weight of hydrogen peroxide as a bleach was evenly mixed with a solution of the hydrolyzate to produce a cellulose triacetate with a degree of acetylation of 60.9% and a viscosity average degree of polymerization of 313 (CTA, mannose content 1.23 mole %, xylose content 1.34 mole %). This CTA had a YI of 3.1, a haze value of 2.7, and a transparency of 79.2%.

When the releasability of the film from the support was evaluated in the same manner as in Example 1, the releasability rating of the film was "O".

Example 3

Except that a softwood sulfite pulp ($\alpha$-cellulose content 96.1%, mannose content about 1.4 mole %, xylose content about 1.4 mole %) was used in lieu of the starting pulp used in Example 1, the procedure of Example 1 was otherwise repeated to produce a cellulose triacetate (CTA). This CTA had a mannose content of 0.76 mole %, a xylose content of 0.73 mole%, a YI of 6.8, a haze value of 6.0, and a transparency of 84.0%. When the releasability of the CTA from the support was evaluated as in Example 1, the rating of "O" was obtained.

Comparative Example

One-hundred (100) parts by weight of a hardwood kraft pulp ($\alpha$-cellulose content 98.3%, mannose content about 0.3 mole %, xylose content about 1.1 mole %) was sprayed with 50 parts by weight of glacial acetic acid for activation. Then, a mixture of 445 parts by weight of glacial acetic acid, 265 parts by weight of acetic anhydride, and 8.3 parts by weight of sulfuric acid was added to the activated mixture, and the esterification reaction was carried out in the conventional manner. Thereafter, the hydrolysis reaction was carried out to provide a cellulose triacetate with a degree of acetylation of 61.0% and a viscosity average degree of polymerization of 286 (CTA, mannose content 0.28 mole %, xylose content 1.03 mole %). This CTA had a YI of 9.5, a haze value of 3.4, and a transparency of 74.2%.
When the releasability of the film was evaluated as in Example 1, the rating was "X".

**Claims**

1.  A cellulose triacetate containing, in terms of monosaccharides constituting a polysaccharide fraction:

    -   mannose and xylose in a mannose/xylose ratio of 0.35 to 2.0 (by mole), and
    -   a total content of mannose and xylose of 1.6 to 4 mole %.

2.  The cellulose triacetate according to claim 1, wherein the total content of mannose and xylose is 2 to 3.5 mole %.

3.  The cellulose triacetate according to claim 1 or 2, which has an average degree of acetylation of 58 to 62.5%.

4.  The cellulose triacetate according to any of claims 1 to 3, which has a yellowness index of 1 to 10, a haze value of 1 to 8 and a transparency of 60 to 100%, wherein said yellowness index (YI) is determined by weighing exactly 12.0 g of cellulose triacetate (CTA), previously dried, adding 88.0 g of a mixture of methylene chloride-methanol (9:1, w/w), and effecting thorough dissolution (a solution containing CTA in a concentration of 12% by weight); using a color difference meter (Nippon Denshoku Kogyo Co., Ltd., Color Difference Meter $\Sigma$90) and a glass cell (45 mm wide, 45 mm high; light path length 10 mm); performing measurements and calculating YI by means of the following equation:

$$YI = YI_2 - YI_1$$

    where $YI_1$ represents YI for the mixture of methylene chloride-methanol (9:1, w/w), and $YI_2$ shows YI for the CTA 12 % (by weight) solution;
    said haze value is determined by weighing exactly 12.0 g of cellulose triacetate (CTA), previously dried, adding 88.0 g of a mixture of methylene chloride-methanol (9:1, w/w), and effecting thorough dissolution (CTA 12 % (by weight) solution); using a turbidimeter (Nippon Denshoku Kogyo Co., Ltd.) and a glass cell (45 mm wide, 45 mm high, light path length 10 mm) and performing measurements by putting the mixture of methylene chloride-methanol (9:1, w/w) in the glass cell, setting the cell in the turbidimeter and performing zeroing and calibration, then putting the CTA 12 % (by weight ) solution in the glass cell, setting the cell in the turbidimeter, and recording the reading; and said transparency is determined by weighing exactly 8.0 g of cellulose triacetate (CTA), previously dried, adding 125.3 g of a mixture of methylene chloride-methanol (9:1, w/w), and effecting thorough dissolution (CTA 6 % (by weight) solution); using an AKA photoelectric colorimeter equipped with a cesium photoelectric tube and a filter No. 12, putting the mixture of methylene chloride-methanol (9:1, w/w) in the glass cell with a light path length of 100 mm and measuring the blank transmittance, then putting the CTA 6 % (by weight) solution in the glass cell with a light path length of 100 mm and measuring its transmittance, where with the blank transmittance value being taken as 100 %, the percentage of the transmittance value of the sample solution is recorded as the transparency of the sample.

5. A method of producing a cellulose triacetate according to any of claims 1 to 4, which comprises acetylating a pulp containing, in terms of monosaccharides constituting a polysaccharide fraction:

- a mannose/xylose ratio of 0.35 to 2.0 (by mole), and
- a total content of mannose and xylose of 2 to 6 mole %.

6. The method of claim 5, wherein a pulp having an α-cellulose content of 90 to 97 % by weight is used.

7. The method of claim 5 or 6, wherein a pulp having a total content of mannose and xylose of 2.5 to 5 mole % is used.

8. The method of any of claims 5 to 7, wherein a pulp having an α-cellulose content of 92 to 96 % by weight and a total content of mannose and xylose of 2.5 to 5 mole % is used.

9. The method of any of claims 5 to 8, wherein the acetylating step is carried out using 400 to 500 parts by weight of acetic acid relative to 100 parts by weight of the pulp.

10. The method of any of claims 5 to 9, which includes a step of treating the product cellulose triacetate with an oxidizing agent.

11. Use of a cellulose triacetate according to any of claims 1 to 4 for forming a film.

12. A cellulose triacetate film obtainable by casting a solution of cellulose triacetate of any of claims 1 to 4 on a support, and releasing the film from said support after partial drying.

**Patentansprüche**

1. Cellulosetriacetat, enthaltend, ausgedrückt als Monosaccharide, welche eine Polysaccharidfraktion bilden:

- Mannose und Xylose in einem Verhältnis von Mannose / Xylose von 0,35 bis 2,0 (ausgedrückt als mol) und

- einen Gesamtgehalt von Mannose und Xylose von 1,6 bis 4 mol%.

2. Cellulosetriacetat gemäß Anspruch 1, worin der Gesamtgehalt von Mannose und Xylose 2 bis 3,5 mol% beträgt.

3. Cellulosetriacetat gemäß Anspruch 1 oder 2, welches einen mittleren Acetylierungsgrad von 58 bis 62,5 % hat.

4. Cellulosetriacetat gemäß einem der Ansprüche 1 bis 3, welches einen Vergilbungsgrad von 1 bis 10, einen Schleierwert von 1 bis 8 und eine Durchlässigkeit von 60 bis 100 % hat, worin der Vergilbungsgrad (YI) bestimmt wird durch genaues Abwiegen von 12,0 g von vorher getrocknetem Cellulosetriacetat (CTA), Zugeben von 88,0 g einer Mischung von Methylenchlorid-Methanol (9 : 1, Gew./Gew.) und Durchführen einer gründlichen Auflösung (eine Lösung, die CTA in einer Konzentration von 12 Gew.-% enthält), Verwenden eines Farbunterschied-Messgeräts (Nippon Denshoku Kogyo Co., Ltd., Color Difference Meter Σ90) und einer Glaszelle (45 mm breit, 45 mm hoch, Lichtweglänge 10 mm), Durchführen von Messungen und Berechnen von YI mittels der folgenden Gleichung:

$$YI = YI_2 - YI_1$$

worin $YI_1$ YI für die Mischung von Methylenchlorid-Methanol (9 : 1, Gew./Gew.) bedeutet, und $YI_2$ YI für die 12 gew.-%ige CTA-Lösung anzeigt;
der Schleierwert bestimmt wird durch genaues Abwiegen von 12,0 g vorher getrocknetem Cellulosetriacetat (CTA), Zugeben von 88,0 g einer Mischung von Methylenchlorid-Methanol (9 : 1, Gew./Gew.) und Durchführen einer gründlichen Auflösung (12 gew.-%ige CTA-Lösung), Verwenden eines Trübungsmessgeräts (Nippon Denshoku Kogyo Co., Ltd.) und einer Glaszelle (45 mm breit, 45 mm hoch, Lichtweglänge 10 mm) und Durchführen von Messungen durch Einbringen der Mischung von Methylenchlorid-Methanol (9 : 1, Gew./Gew.) in die Glaszelle, Einsetzen der Zelle in das Trübungsmessgerät und Ermitteln des Leerwerts und der Kalibrierung, anschließendes Einbringen der 12 gew.-%igen CTA-Lösung in die Glaszelle, Einsetzen der Zelle in das Trübungsmessgerät und Aufzeichnen der Ablesung;und

die Durchlässigkeit bestimmt wird durch genaues Abwiegen von 8,0 g vorher getrocknetem Cellulosetriacetat (CTA), Zugeben von 125,3 g einer Mischung von Methylenchlorid-Methanol (9 : 1, Gew./Gew.) und Durchführen einer gründlichen Auflösung (6 gew.-%ige CTA-Lösung), Verwenden eines fotoelektriischen AKA-Colorimeters, ausgerüstet mit einem fotoelektrischen Cäsiumrohr und einem Filter Nr. 12, Einbringen der Mischung von Methylenchlorid-Methanol (9 : 1, Gew./Gew.) in die Glaszelle mit einer Lichtweglänge von 100 mm und Messen der Leerdurchlässigkeit, anschließendes Einbringen der 6 gew.-%igen CTA-Lösung in die Glaszelle mit einer Lichtweglänge von 100 mm und Messen ihrer Durchlässigkeit, wobei der Leer-Durchlässigkeitswert als 100 % genommen wird, und der prozentuale Durchlässigkeitswert der Probelösung als Durchlässigkeit der Probe aufgezeichnet wird.

5. Verfahren zur Herstellung eines Cellulosetriacetats gemäß einem der Ansprüche 1 bis 4, welches umfasst das Acetylieren einer Pulpe, enthaltend, ausgedrückt als Monosaccharide, welche eine Polysaccaridfraktion bilden:

- ein Verhältnis von Mannose / Xylose von 0,35 bis 2,0 (ausgedrückt als mol) und

- einen Gesamtgehalt von Mannose und Xylose von 2 bis 6 mol%.

6. Verfahren nach Anspruch 5, worin eine Pulpe mit einem $\alpha$-Cellulosegehalt von 90 bis 97 Gew.-% verwendet wird.

7. Verfahren nach Anspruch 5 oder 6, worin eine Pulpe mit einem Gesamtgehalt von Mannose und Xylose von 2,5 bis 5 mol% verwendet wird.

8. Verfahren nach einem der Ansprüche 5 bis 7, worin eine Pulpe mit einem $\alpha$-Cellulosegehalt von 92 bis 96 Gew.-% und einem Gesamtgehalt von Mannose und Xylose von 2,5 bis 5 mol% verwendet wird.

9. Verfahren nach einem der Ansprüche 5 bis 8, worin der Acetylierungsschritt unter Verwendung von 400 bis 500 Gewichtsteilen Essigsäure, bezogen auf 100 Gewichtsteile der Pulpe, durchgeführt wird.

10. Verfahren nach einem der Ansprüche 5 bis 9, welches einen Schritt der Behandlung des Cellulosetriacetatprodukts mit einem Oxidationsmittel umfasst.

11. Verwendung eines Cellulosetriacetats gemäß einem der Ansprüche 1 bis 4 zur Bildung eines Films.

12. Cellulosetriacetatfilm, erhältlich durch Gießen einer Lösung von Cellulosetriacetat nach einem der Ansprüche 1 bis 4 auf einen Träger und Ablösen des Films von dem Träger nach teilweiser Trocknung.

## Revendications

1. Triacétate de cellulose contenant, eu égard au monosaccharides constituant une fraction polysaccharidique :

- du mannose et du xylose selon un rapport mannose/xylose de 0,35 à 2,0 (en moles), et
- une teneur totale en mannose et en xylose de 1,6 à 4 moles %.

2. Triacétate de cellulose selon la revendication 1, dans lequel la teneur totale en mannose et en xylose est de 2 à 3,5 moles %.

3. Triacétate de cellulose selon la revendication 1 ou 2, ayant un degré d'acétylation moyen de 58 à 62,5 %.

4. Triacétate de cellulose selon l'une quelconque des revendications 1 à 3, ayant un indice de jaunissement de 1 à 10, un indice de trouble de 1 à 8 et une transparence de 60 à 100 %, dans lequel ledit indice de jaunissement (YI) est déterminé en pesant exactement 12,0 g de triacétate de cellulose (CTA) préalablement séché, en ajoutant 88,0 g d'un mélange de chlorure de méthylène et de méthanol (9:1, p/p), et en effectuant une dissolution complète (une solution contenant du CTA selon une concentration de 12 % en poids) ; en utilisant un dispositif de mesure de différence de couleurs (Nippon Denshoku Kogyo Co., Ltd., Dispositif de mesure de différence de couleurs Σ90) et une cuve de verre (45 mm de largeur, 45 mm de hauteur ; longueur de trajet de lumière 10 mm) ; en effectuant des mesures et en calculant l'indice YI à l'aide de l'équation suivante.

$$YI = YI_2 - YI_1$$

dans laquelle $YI_1$ représente la valeur YI pour le mélange de chlorure de méthylène et de méthanol (9:1, p/p), et $YI_2$ représente YI pour la solution de CTA à 12 % (en poids) ;

ledit indice de trouble est déterminé en pesant exactement 12,0 g de triacétate de cellulose (CTA) préalablement séché, en ajoutant 88,0 g d'un mélange de chlorure de méthylène et de méthanol (9:1, p/p), et en effectuant une dissolution complète (solution à 12 % de CTA (en poids)); en utilisant un turbidimètre (Nippon Denshoku Kogyo Co., Ltd.) et une cuve de verre (45 mm de largeur, 45 mm de hauteur ; longueur de trajet de lumière 10 mm) ; et en effectuant des mesures en introduisant le mélange de chlorure de méthylène et de méthanol (9:1, p/p) dans la cuve de verre, en installant la cuve dans le turbidimètre et en effectuant une remise à zéro et un étalonnage, puis en introduisant la solution de CTA 12 % (en poids) dans la cuve de verre, en installant la cuve dans le turbidimètre, et en enregistrant la lecture ; et

ladite transparence est déterminée en pesant exactement 8,0 g de triacétate de cellulose (CTA) préalablement séché, en ajoutant 125,3 g d'un mélange de chlorure de méthylène et de méthanol (9:1, p/p), et en effectuant une dissolution complète (solution à 6 % de CTA (en poids)) ; en employant un colorimètre photoélectrique AKA équipé d'un tube photoélectrique à césium et d'un filtre N° 12, en introduisant le mélange de chlorure de méthylène et de méthanol (9:1, p/p) dans la cuve de verre ayant une longueur de trajet de lumière de 100 mm, et en mesurant la transmittance à blanc, en introduisant ensuite la solution à 6 % de CTA (en poids) dans la cuve de verre ayant une longueur de trajet de lumière de 100 mm, et en mesurant sa transmittance, et la valeur de la transmittance à blanc étant considérée comme de 100%, le pourcentage de la valeur de la transmittance de la solution de l'échantillon est enregistrée en tant que transparence de l'échantillon.

5. Procédé de production d'un triacétate de cellulose selon l'une quelconque des revendications 1 à 4, comprenant une acétylation d'une pâte contenant, eu égard aux monosaccharides constituant une fraction polysaccharidique :

   - un rapport mannose/xylose de 0,35 à 2,0 (en moles), et
   - une teneur totale de mannose et de xylose de 2 à 6 moles %.

6. Procédé selon la revendication 5, dans lequel on emploie une pâte ayant une teneur en $\alpha$-cellulose de 90 à 97 % en poids.

7. Procédé selon la revendication 5 ou 6, dans lequel on emploie une pâte ayant une teneur totale en mannose et en xylose de 2,5 à 5 moles %.

8. Procédé selon l'une quelconque des revendications 5 à 7, dans lequel on emploie une pâte ayant une teneur en $\alpha$-cellulose de 92 à 96 % en poids et une teneur totale en mannose et en xylose de 2,5 à 5 moles %.

9. Procédé selon l'une quelconque des revendications 5 à 8, dans lequel on effectue l'étape d'acétylation en utilisant de 400 à 500 parties en poids d'acide acétique pour 100 parties en poids de la pâte.

10. Procédé selon l'une quelconque des revendications 5 à 9, comprenant une étape de traitement du triacétate de cellulose produit avec un agent oxydant.

11. Utilisation d'un triacétate de cellulose selon l'une quelconque des revendications 1 à 4, pour former un film.

12. Film de triacétate de cellulose pouvant être obtenu en coulant une solution de triacétate de cellulose selon l'une quelconque des revendications 1 à 4, sur un support, et en séparant le film dudit support après séchage partiel.